Europäisches Patentamt

European Patent Office

Office européen des brevets

(11) Veröffentlichungsnummer: **0 510 394 A2**

# EUROPÄISCHE PATENTANMELDUNG

(21) Anmeldenummer: **92105631.3**

(51) Int. Cl.⁵: **H04N 1/32**

(22) Anmeldetag: **01.04.92**

(30) Priorität: **26.04.91 DE 4113757**

(43) Veröffentlichungstag der Anmeldung:
**28.10.92 Patentblatt 92/44**

(84) Benannte Vertragsstaaten:
**AT BE CH ES FR GB IT LI NL**

(71) Anmelder: **SIEMENS AKTIENGESELLSCHAFT**
**Wittelsbacherplatz 2**
**W-8000 München 2(DE)**

(72) Erfinder: **Siegmund, Wolfgang, Dr. Dipl.-Ing.**
**Eichelhäherstrasse 38**
**W-8000 München 60(DE)**
Erfinder: **Mayer, Paul-Gerhard, Dipl.-Math.**
**Adlzreiterstrasse 19**
**W-8000 München 2(DE)**
Erfinder: **Linner, Herbert, Dipl.-Ing. (Fh)**
**Biberstrasse 17**
**W-8300 Markt Ergolding(DE)**
Erfinder: **Fellerer, Josef, Dipl.-Phys.**
**Willibaldstrasse 199**
**W-8000 München 21(DE)**

(54) **Verfahren zum Übertragen einer Telefaxnachricht.**

(57) Die Erfindung betrifft ein Verfahren zum Übertragen einer Telefaxnachricht von einem sendeseitigen Telefaxendgerät (TF) an eine Mehrzahl von empfangsseitigen Telefaxendgeräten (RF1... RFn, RFn + 1...RFm). Wenn ein Sendeauftrag dahingehend definiert ist, daß dieselbe Telefaxnachricht an eine Mehrzahl von Adressaten zu übertragen ist, besteht eine von der Anzahl der vorgesehenen Adressaten abhängige Wahrscheinlichkeit, daß der Sendeauftrag nicht vollständig, d. h. nicht hinsichtlich aller Adressaten, ausgeführt wird. Bei dem erfindungsgemäßen Verfahren ist vorgesehen, daß am sendeseitigen Telefaxendgerät Informationen gebildet werden, die die empfangsseitigen Telefaxendgeräte (RF1...RFn), denen die Nachricht übermittelt worden ist, beziehungsweise die empfangsseitigen Telefaxendgeräte (RFn + 1...RFm), denen die Telefaxnachricht nicht übermittelt worden ist, bezeichnen. Den letztgenannten Telefaxendgeräten wird zu übermittelnde Telefaxnachricht durch gezielte Ansteuerung übermittelt.

FIG 1

Die Erfindung betrifft ein Verfahren zum Übertragen einer Telefaxnachricht nach dem Oberbegriff des Anspruchs 1.

Das Medium Telefax (Fernkopieren) ist bereits weit verbreitet und wird insbesondere auch mit dem weiteren Ausbau des dienstintegrierten digitalen Nachrichtennetzes (ISDN) weitere Verbreitung erfahren. Neben dem Zustellen einer Telefaxnachricht an genau einen Empfänger ist es bekannt, die identische Telefaxnachricht an eine Mehrzahl von Empfängern zu übertragen. So ist aus der Produktschrift der Firma Siemens "System Hicom 300 Tele-Communications-Service", Bestell-Nr. A19100-K3163-G585 bereits ein Kommunikationssystem bekannt, das das Leistungsmerkmal "Rundsenden von Telefax-Nachrichten" realisiert (Seiten 6 f. der Produktschrift). Dabei kann dieselbe Telefaxnachricht an bis zu 50 verschiedene Empfänger übermittelt werden. Soll genau eine Telefaxnachricht an eine Mehrzahl von Adressaten übertragen werden, besteht eine von der Anzahl der vorgesehenen Adressaten abhängige Wahrscheinlichkeit, daß ein Sendeauftrag nicht vollständig, das heißt, nicht hinsichtlich aller Adressaten ausgeführt wird. Eine Telefaxnachricht kann an einen bestimmten Adressaten nicht zugestellt werden, wenn beispielsweise das empfangsseitige Endgerät nicht betriebsbereit ist (kein Papier; Ausfall) oder der Übertragungsweg gestört bzw. unterbrochen ist. Die nachträgliche Erledigung ursprünglich nicht vollständig ausgeführter Sendeaufträge verursacht für die Bedienperson des sendeseitigen Telefaxendgeräts einen relativ großen Arbeitsaufwand. Zunächst ist zu klären, ob ein Sendeauftrag an eine Mehrzahl von Adressaten vollständig ausgeführt worden ist. Gegebenenfalls ist festzustellen, welche Adressaten die Telefaxnachricht erhalten bzw. nicht erhalten haben. Sodann sind die erforderlichen Arbeiten durchzuführen, um die zuzustellende Telefaxnachricht auch an die restlichen empfangsseitigen Telefaxendgeräte zu übertragen, die im Rahmen des ersten Verbindungsherstellungsversuchs nicht erreicht wurden. Hierzu sind die jeweiligen Rufnummern und die Vorlagen, die die Telefaxnachricht enthalten, in das sendeseitige Faxendgerät einzugeben.

Der Erfindung liegt daher die Aufgabe zugrunde, ein Verfahren der eingangs genannten Art anzugeben, das die nachträgliche Bearbeitung ursprünglich nicht vollständig erledigter Sendeaufträge hinsichtlich einer Mehrzahl von Adressaten erleichtert.

Diese Aufgabe wird erfindungsgemäß mit den Merkmalen des Anspruchs 1 gelöst.

Das Verfahren gemäß der Erfindung ist mit einer Mehrzahl von Vorteilen verbunden. Die sendeseitigen Telefaxendgeräte, die im Rahmen eines ersten Verbindungsherstellungsversuches nicht erreicht wurden, werden durch das sendeseitige Telefaxendgerät selbsttätig ermittelt. Damit erübrigt sich eine entsprechende Prüfung durch eine Bedienperson. Darüber hinaus erübrigt es sich für die Bedienperson, sowohl eine bzw. eine Mehrzahl von Rufnummern der nachträglich zu erreichenden empfangsseitigen Telefaxendgeräte als auch die Telefaxnachricht selbst in das sendeseitige Telefaxendgerät einzugeben.

Ein besonderer Vorteil besteht darin, daß nach einem zunächst nicht vollständig ausgeführten Sendeauftrag die nachträgliche Sendeauftragbearbeitung durch einen besonderen Befehl auszulösen ist. Gegenüber einer hier nicht vorgesehenen selbsttätigen nachträglichen Erledigung eines zunächst nicht ausgeführten Sendeauftrages ermöglicht das erfindungsgemäße Verfahren, daß die Bedienperson zunächst einen Überblick über den Umfang des zunächst erledigten Sendeauftrages erhält. Die Bedienperson kann weiterhin entscheiden, ob dieselbe Telefaxnachricht nachträglich an die restlichen empfangsseitigen Telefaxendgeräte zugestellt werden soll. Damit wird einerseits ermöglicht, die nachträgliche zu übermittelnde Telefaxnachricht zu aktualisieren bzw. von einer Übertragung abzusehen.

Die Erfindung wird nun anhand der Zeichnungen beschrieben.

Es zeigen

FIG 1  eine Vorrichtung zur Durchführung des erfindungsgemäßen Verfahrens,

FIG 2  von dem Steuerwerk der Vorrichtung nach Figur 1 erzeugte Datenbereiche, und

FIG 3  ein Flußdiagramm des erfindungsgemäßen Verfahrens.

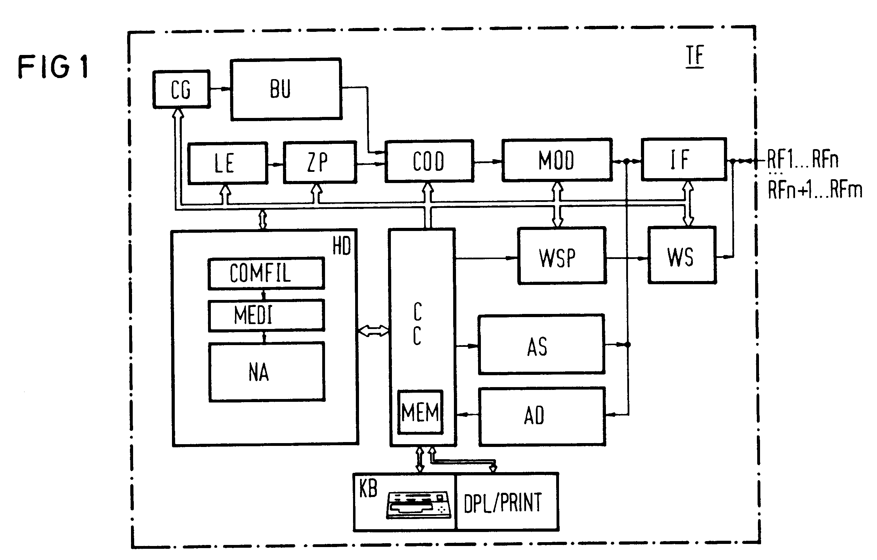

Die in Figur 1 dargestellte Vorrichtung zur Durchführung des Verfahrens gemäß der Erfindung besteht aus einem an sich bekannten Telefaxendgerät (Faksimilegerät). Das Telefaxendgerät TF wird durch ein zentrales Steuerwerk CC gesteuert, dem ein das erfindungsgemäße Verfahren definierendes Datenverarbeitungsprogramm zugeordnet ist. Das Programm ist in einem nichtflüchtigen Speicher HD abgespeichert und wird im Betrieb in einen flüchtigen Speicher MEM geladen.

Das zentrale Steuerwerk CC ist über einen Datenbus mit einem Zeichengenerator CG, mit einer Leseeinheit LE, mit einem Zeilenpuffer ZP, mit einem Codierer COD, mit dem nichtflüchtigen Speicher HD, mit einem Modulator MOD, mit einer Schnittstelleneinheit IF sowie mit einem Wählspeicher WSP und mit einem Wählsender WS verbunden.

Zwischen der Schnittstelleneinheit IF und dem zentralen Steuerwerk CC ist sowohl ein Ablaufsignalsender AS sowie ein Ablaufsignal-Detektor AD geschaltet. Der Zeichengenerator CG ist mit einem Bildsignalumsetzer BU und dieser mit einem Codierer COD verbunden. Ferner sind die Leseeinrichtung LE, der Zeilenpuffer ZP, der Codierer COD, der Speicher HD, der Modulator MOD sowie die Schnittstelleneinheit IF, wie in FIG 1 dargestellt, hintereinander geschaltet. Der mit dem Steuerwerk CC verbundene Wählspeicher WSP ist dem Wählsender WS vorgeschaltet.

Mit dem Steuerwerk CC ist ferner eine Bedienungseinheit KB verbunden, die insbesondere Tasten zur Eingabe von Befehlen aufweist, sowie gegebenenfalls eine optische Anzeigeeinrichtung DPL, auf der insbesondere eine Information darstellbar ist, die auf die vollständige bzw. nichtvollständige Bearbeitung eines Sendeauftrags hinweist, und auf der ferner die Rufnummern bzw. rufnummernindividuelle Daten der empfangsseitigen Telefaxendgeräte RFn + 1...RFm darstellbar sind, denen die Telefaxnachricht nicht übermittelt werden konnte. Ferner kann alternativ oder zusätzlich zu der Anzeigeeinrichtung DPL eine mit dem Steuerwerk CC verbundene Druckeinrichtung PRINT vorgesehen sein, die in an sich bekannter Weise Sendeprotokolle (Zustellvermerke) und im Rahmen des erfindungsgemäßen Verfahrens die Informationen ausdruckt, die auf der Anzeigeeinrichtung DPL darstellbar sind.

Der Zeichengenerator CG erzeugt Zeichenmusterdaten in Abhängigkeit von Zeichendaten, die das Steuerwerk CC liefert. Der dem Zeichengenerator CG nachgeschaltete Bildsignalumsetzer BU setzt die vom Zeichengenerator CG erzeugten Zeichenmusterdaten in Bildsignalelemente um. Die Bildsignalelemente werden durch den nachgeschalteten Codierer COD codiert und in den Speicher HD übertragen. Der Modulator MOD moduliert die zwischengespeicherten Bildsignalelemente gemäß einem den CCITT-Empfehlungen entsprechenden Modulationsverfahren.

Die Leseeinheit LE liest auf Vorlagen angeordnete Bildelemente zeilenweise und setzt die gelesenen Bildelemente in erste zu übertragende elektrische Bildsignalelemente um. Diese Bildsignalelemente werden in dem Zeilenpuffer ZP zwischengespeichert und anschließend in den Codierer COD übertragen. Die von der Leseeinrichtung LE erzeugten Bildsignalelemente werden vom Codierer COD und den nachgeschalteten Einheiten HD, MOD, IF in gleicher Weise bearbeitet wie die vom Bildsignalumsetzer BU erzeugten Bildsignalelemente.

Der zwischen dem Steuerwerk CC und der Schnittstelleneinheit IF geschaltete Ablaufsender AS überträgt Ablaufsignale an die Schnittstelleneinheit IF, um Bildsignalelemente an jeweils ein bestimmtes empfangsseitiges Telefaxendgerät RF1...RFn, RFn + 1... RFm, im Zusammenwirken mit dem Steuerwerk CC, insbesondere gemäß den CCITT-Empfehlungen zu übertragen.

Der Ablaufsignaldetektor AD erkennt Ablaufsignale, welche von einem empfangsseitigen Telefaxendgerät RF entsprechend einem genormten Faksimile-Übertragungssteuerungsverfahren übertragen und von der Schnittstelleneinheit IF empfangen werden. Zu den Ablaufsignalen gehören die Signale, die in der Verbindungsaufbauphase in der sogenannten Einleitungsphase zur Identifizierung und Auswahl der gewüschten Gerätefunktion, in der Schlußphase einschließlich Fernsprechbetrieb zwischen den an einer Verbindung beteiligten Telefaxendgeräte übertragen werden.

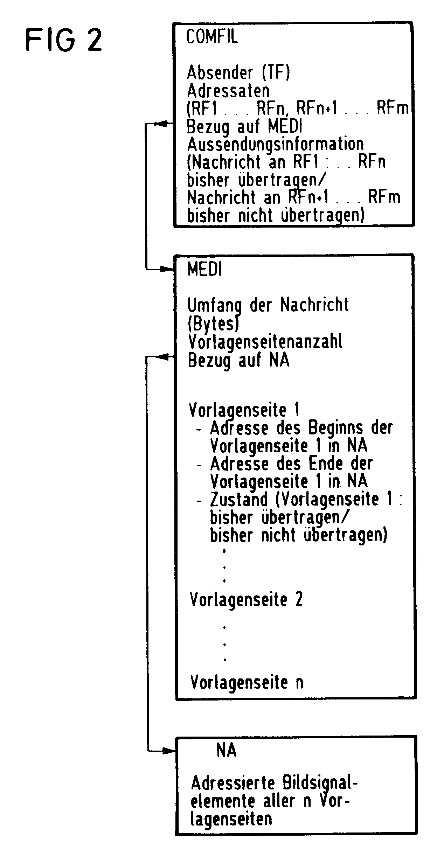

Der in Figur 1 dargestellte nichtflüchtige Speicher HD weist drei miteinander verbundene Einheiten COMFIL, MEDI und NA auf. Diese Einheiten bezeichnen Datenbereiche, die das Programm, das die Schritte des erfindungsgemäßen Verfahrens definiert, generiert. Der erste Datenbereich COMFIL dient der Verwaltung von Sendeaufträgen und enthält, wie FIG 2 zeigt, eine Information über den Absender (das sendeseitige Telefaxendgerät TF), eine Information über die Adressaten (beispielsweise die Rufnummern der empfangsseitigen Telefaxendgeräte RF1...RFn, RFn + 1...RFm) sowie eine Bezugsinformation, die auf den dem ersten Datenbereich zugeordneten zweiten Datenbereich MEDI hinweist. Außerdem enthält COMFIL eine sogenannte Aussendungsinformation für jeden Adressaten, die angibt, ob die für einen Adressaten bestimmte Nachricht ausgesendet worden ist oder noch zur Aussendung ansteht. Es wird hier davon ausgegangen, daß bei dem ersten Versuch, den Sendeauftrag auszuführen, die Telefaxnachricht an die Telefaxendgeräte RF1...RFn abgesetzt wurde, während die Telefaxnachricht an die Telefaxendgeräte RFn + 1...RFm nicht abgesetzt werden konnte.

Der zweite Datenbereich MEDI dient der Nachrichtenverwaltung. Er enthält in einem allgemeinen Teil eine Information über den Umfang der Nachricht, d.h. die Anzahl der Bytes sowie eine Information über die Anzahl der Seiten.

Neben dem allgemeinen Teil enthält der Datenbereich MEDI vorlagenseitenindividuelle Unterbereiche. In jedem vorlagenseitenindividuellen Unterbereich wird die Adresse im dritten Datenbereich NA für den Beginn der jeweiligen Vorlagenseite sowie die Adresse im Datenbereich NA für das Ende der jeweiligen Vorlagenseite angegeben. Ferner enthält jeder seitenindividuelle Unterbereich eine Zustandsinformation, die angibt, ob die jeweilige Vorlagenseite bereits übertragen bzw. nicht übertragen worden ist. Die Aktualisierung der Zustandsinformation erfolgt vorzugsweise anhand von Empfangsquittungssignalen, die das empfangsseitige Endgerät RF im Anschluß an die Übertragung jeweils einer Vorlagenseite in an sich bekannter Weise an das sendeseitige Telefaxendgerät TF rückübermittelt.

Ferner enthält der zweite Datenbereich MEDI eine Bezugsinformation, die auf den Namen des dritten Datenbereichs NA hinweist, der dem konkreten zweiten Datenbereich zugeordnet ist. Im dritten Datenbereich NA sind die Bildsignalelemente, die die Leseeinheit LE erzeugt, vorlagenseitenorientiert abgespeichert. Mindestens die Adresse des Vorlagenseitenbeginns und die Adresse des Vorlagenseitenendes werden vom System ermittelt und wie beschrieben im zweiten Datenbereich MEDI abgelegt.

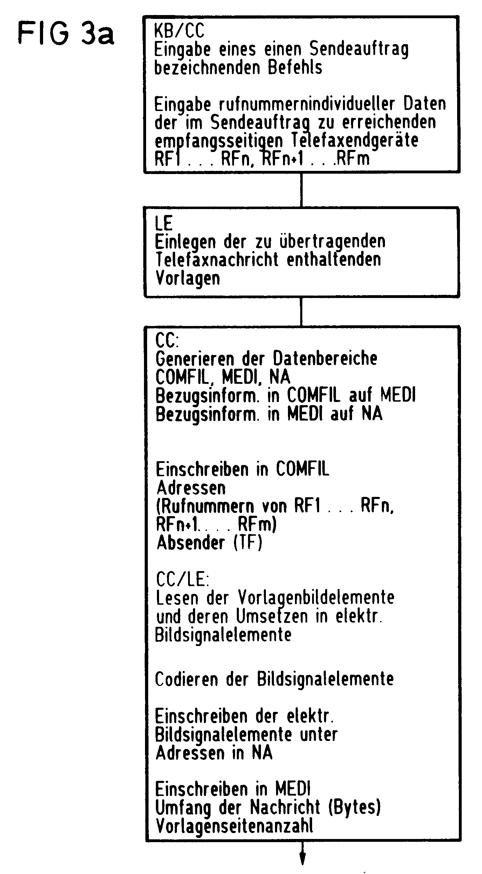

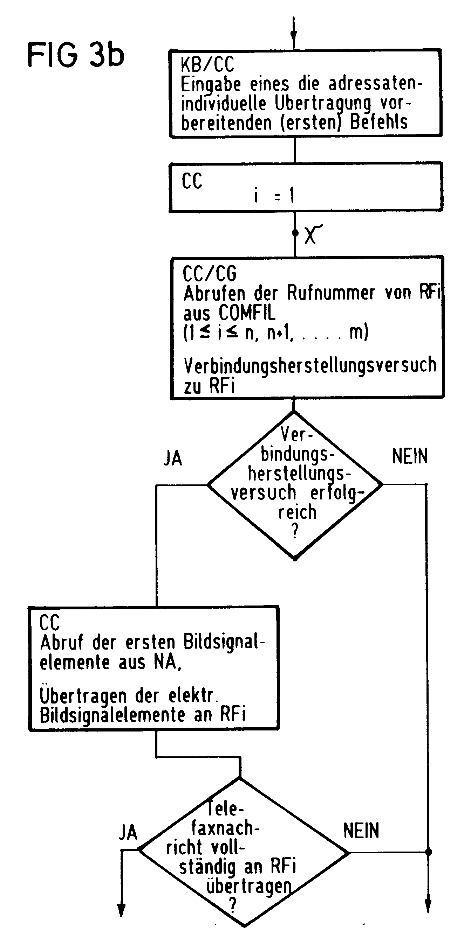

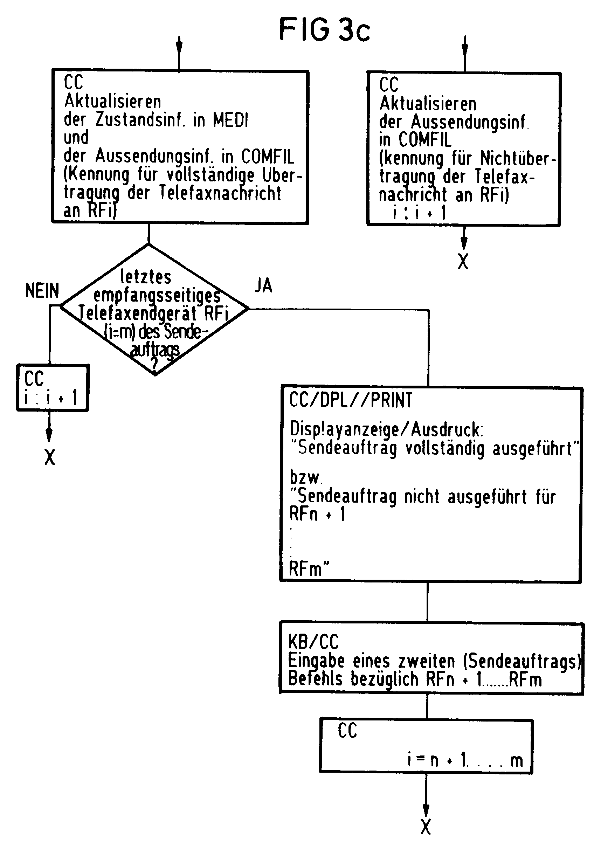

Die einzelnen Verfahrensschritte des erfindungsgemäßen Verfahrens werden nun anhand des Flußdiagramms in Figur 3 beschrieben. Es wird davon ausgegangen, daß eine Telefax-Nachricht an eine Mehrzahl von empfangsseitigen Telefax-Endgeräten übermittelt wird.

Es wird zunächst ein die Betriebsart "Sendeauftrag" bezeichnender Befehl in die Bedienungseinheit KB des sendeseitigen Telefaxendgeräts TF eingegeben, der dem Steuerwerk CC zugeführt wird. Außerdem werden über die Bedienungseinheit KB die Rufnummern bzw. rufnummernindividuelle Daten aller empfangsseitigen Endgeräte RF1...RFn, RFn + 1...RFm eingegeben, an welche die die Telefaxnachricht darstellenden ersten Bildsignalelemente übertragen werden sollen. Ferner werden der Leseeinheit LE des sendeseitigen Telefaxendgerätes TF die Vorlagen zugeführt, die die zu übertragende Telefaxnachricht enthalten.

Das Steuerwerk CC generiert die obenbeschriebenen Datenbereiche COMFIL, MEDI und NA.

In den ersten Datenbereich COMFIL schreibt das Steuerwerk CC eine Absenderinformation ein, die das eigene sendeseitige Telefaxendgerät TF bezeichnet sowie alle Adressateninformationen, die jeweils mindestens aus den eingegebenen Rufnummern der Zielempfangsgeräte RF1...RFn, RFn + 1...RFm bestehen.

Die Vorlagen werden in an sich bekannter Weise von der Leseeinrichtung LE zeilenweise gelesen und in elektrische Bildsignalelemente umgesetzt. Diese werden im Zeilenpuffer ZP zwischengespeichert und vom Codierer nach einem vorbestimmten Verfahren codiert.

Das Steuerwerk CC speichert die umgesetzten Bildsignalelemente im Datenbereich NA unter vorgegebenen Adressen ab und überträgt die Adresse eines jeden Vorlagenseitenbeginns und die Adresse eines jeden Vorlagenseitenendes in die vorlagenseitenindividuellen Unterbereiche des Datenbereichs MEDI. Wenn alle Vorlagen gelesen sind, stellt das Steuerwerk CC die Anzahl der Bytes der Nachricht sowie die Anzahl der Vorlagenseiten fest und schreibt beide Angaben in den allgemeinen Teil des Datenbereichs MEDI ein.

Im Anschluß daran löst die Eingabe eines weiteren Befehls in die Bedienungseinheit KB die eigentliche Durchführung des Sendeauftrags durch das Steuerwerk CC aus. Hierzu ruft das Steuerwerk CC die Rufnummer eines ersten empfangsseitigen Telefaxendgerätes RFi (i = 1) aus dem Datenbereich COMFIL des Speichers HD ab und führt in an sich bekannter Weise einen Verbindungsherstellungsversuch zu diesem empfangsseitigen Telefaxendgerät RF1 durch.

Es wird zunächst davon ausgegangen, daß der Verbindungsherstellungsversuch zu RF1 nicht erfolgreich ist. Gründe für erfolglose Verbindungsherstellungsversuche können beispielsweise der Besetztzustand des jeweiligen empfangsseitigen Telefaxendgerätes, dessen Funktionsstörung oder eine Störung bzw. Unterbrechung des Übertragungsweges sein. Das sendeseitige Telefaxendgerät TF stellt in an sich bekannter Weise fest, daß der unternommene Verbindungsherstellungsversuch nicht positiv verlaufen ist. Das Steuerwerk CC aktualisiert daraufhin die im Datenbereich COMFIL abgespeicherte Aussendungsinformation. Hierzu erstellt das Steuerwerk CC eine den erfolglosen Verbindungsherstellungsversuchbezeichnende Kennung und ordnet diese der ebenfalls im Datenbereich COMFIL abgespeicherten Rufnummer des jeweiligen empfangsseitigen Telefaxendgerätes zu.

Im Anschluß daran ruft das Steuerwerk CC die Rufnummer des empfangsseitigen Telefaxendgerätes RFi + 1 aus dem Datenbereich COMFIL ab und führt einen Verbindungsherstellungsversuch zu diesem Telefaxendgerät RFi + 1 durch. Je nachdem, ob dieser Verbindungsherstellungsversuch negativ oder positiv verläuft, wird das weitere Verfahren wie zuvor bzw. wie im folgenden beschrieben durchgeführt.

Es wird nun davon ausgegangen, daß ein Verbindungsherstellungsversuch zu einem empfangsseitigen Endgerät RFi erfolgreich verlaufen ist. Das Steuerwerk CC ruft dann die im Datenbereich NA abgespeicherten Bildsignalelemente ab und überträgt diese an das jeweilige empfangsseitige Telefaxendgerät RFi. Die Übertragung erfolgt in an sich bekannter Weise. Dabei quittiert das empfangsseitige Telefaxendgerät RFi den Empfang von Bildsignalelementen, die insgesamt eine Vorlagenseite darstellen, durch ein Empfangsquittungssignal. Dieses gelangt über die Schnittstelleneinheit IF an den Ablaufsignal-Detektor AD der das Signal an das Steuerwerk CC weitergibt bzw. das empfangene Signal in eine entsprechende Information umsetzt und diese an das Steuerwerk CC weitergibt. Das Steuerwerk ändert darauf die im zweiten Datenbereich MEDI in dem entsprechenden vorlagenseitenindividuellen Unterbereich abgelegte Zustandsinformation. In dem Unterbereich für die Vorlagenseite 1 ist eine zunächst Zustandsinformation eingetragen, die darauf hinweist, daß die Vorlagenseite 1 nicht übertragen worden ist. Nach Empfang des entsprechenden Empfangsquittungssignales ändert das Steuerwerk CC die Zustandsinformation für die Vorlagenseite 1 dahingehend, daß die geänderte Zustandsinformation den erfolgreichen Abschluß der Übertragung bezeichnet. Damit liegt im System zu jedem Zeitpunkt eine Information darüber vor, welche Vorlagenseite vollständig übertragen worden ist bzw. nicht vollständig übertragen worden ist. Anhand dieser Information kann das Steuerwerk die im Datenbereich COMFIL abgespeicherte Aussendungsinformation aktualisieren. Unabhängig hiervon kann die Aussendungsinformation durch ein Übertragungsquittungssignal des empfangsseitigen Endgeräts aktualisiert werden, das dieses als Antwort auf ein vom sendeseitigen Endgerät übermittelten Signals "Übertragungsende (EOM)" rückübermittelt.

Das Steuerwerk CC aktualisiert die im Datenbereich COMFIL abgespeicherte Aussendungsinformation für das jeweilige empfangsseitige Telefaxendgerät, erzeugt eine den erfolgreichen Verbindungsherstellungsversuch bezeichnende Information und ordnet diese der Rufnummer des jeweiligen Endgerätes im Datenbereich COMFIL des Speichers HD zu.

Das Steuerwerk CC prüft im Anschluß, ob ein Verbindungsherstellungsversuch zu einem weiteren Telefaxendgerät zur weiteren Ausführung des Sendeauftrags durchzuführen ist, d. h. ob dasjenige empfangsseitige Telefaxendgerät, dem zuvor die Telefaxnachricht übermittelt wurde, das letzte im Sendeauftrag bezeichnete empfangsseitige Telefaxendgerät darstellt. Ist diese Abfrage zu verneinen, ist also mindestens ein Verbindungsherstellungsversuch zu einem weiteren empfangsseitigen Telefaxendgerät durchzuführen, so springt das in FIG 3 in Form eines Flußdiagramms dargestellte Programm zu "x" zurück.

Ist dagegen das empfangsseitige Telefaxendgerät, dem zuvor die Telefaxnachricht zugestellt worden ist, das im Sendeauftrag letztbezeichnete Telefaxendgerät, so greift das Steuerwerk CC auf die im Datenbereich COMFIL des Speichers HD abgespeicherten Aussendungsinformationen zu, die angeben, welchen empfangsseitigen Telefaxendgeräten RF1...RFn die Telefaxnachricht übertragen worden ist bzw. welchen empfangsseitigen Telefaxendgeräten RFn + 1...RFm die Telefaxnachricht nicht übertragen worden ist. Das Steuerwerk CC bildet eine mittels der optischen Anzeigeeinrichtung DPL bzw. mittels der Druckeinrichtung PRINT darstellbare Information, die angibt, ob der Sendeauftrag komplett ausgeführt worden ist bzw. daß der Sendeauftrag nicht ausgeführt worden ist, wobei rufnummernindividuelle Daten derjenigen empfangsseitigen Telefaxendgeräte RFn + 1...RFm mittels der Einrichtungen DPL bzw. PRINT darstellbar sind, denen die Telefaxnachricht nicht zugestellt worden ist.

Diese Informationen bzw. Daten werden selbttätig auf der Anzeigeeinrichtung DDL dargestellt bzw. von der Druckeinrichtung PRINT ausgedruckt. Es kann aber auch vorgesehen sein, daß die Bedienperson des sendeseitigen Telefaxendgerätes durch gezielte Befehlseingabe in die Bedienungseinheit KB diese Informationen abruft und auf der optischen Anzeigeeinrichtung DPL zur Anzeige bringt bzw. den Ausdruck auf der Druckeinrichtung auslöst. Mittels eines weiteren (zweiten) Befehls, der ebenfalls in die Bedienungseinheit KB einzugeben ist, wird das Steuerwerk CC veranlaßt, mindestens einen weiteren Verbindungsherstellungsversuch zu jedem der Telefaxendgeräte RFn + 1...RFm durchzuführen. Es erübrigt sich damit, die Rufnummern dieser Telefaxendgeräte einzugeben. Alternativ kann das Betriebsprogramm des Steuerwerks CC in der Weise ausgestaltet sein, daß jeweils nach Eingabe genau eines zweiten Befehls, der jeweils genau einer Rufnummer nur eines Telefaxendgerätes RFn + 1...RFm zugeordnet ist, jeweils genau einen oder auch mehrere, zeitlich versetzte Verbindungsherstellungsversuche zu dem durch die Rufnummer bestimmten empfangsseitigen Telefaxendgerät herstellt. Auch hier erübrigt es sich, die Rufnummer des jeweiligen Telefaxendgeräts einzugeben. Das Betriebsprogramm des Steuerwerks CC durchläuft dann den mit "x" beginnenden, in FIG 3 dargestellten Bereich des Betriebsprogramms bis zu dem Verfahrensschritt "Displayanzeige/Ausdruck".

**Patentansprüche**

1. Verfahren zum Übertragen einer Telefaxnachricht von einem sendeseitigen Telefaxendgerät (TF) an eine Mehrzahl von empfangsseitigen Telefaxendgeräten (RF1...RFn, RFn + 1...RFm), wobei eine im sendeseitigen Telefaxendgerät (TF) angeordnete Leseeinrichtung (LE) im Zusammenwirken mit einem Steuerwerk (CC) des sendeseitigen Telefaxendgeräts (TF) auf Vorlagen angeordnete Graphikelemente liest und in zu übertragende elektrische Signalelemente umsetzt, wobei die die Telefaxnachricht darstellenden elektrischen Signalelemente und die Rufnummern aller empfangsseitigen Telefaxendgeräte (RF1...RFn, RFn + 1...RFm) bezeichnenden Daten in einem im sendeseitigen Telefaxendgerät (TF) angeordneten Speicher (HD, MEM) abgespeichert werden, wobei das sendeseitige Telefaxendgerät (TF) nacheinander Verbindungsherstellungsversuche zu den durch die abgespeicherten Rufnummerndaten bezeichneten empfangsseitigen Endgeräte (RF1... RFn, RFn + 1...RFm) unternimmt und im Rahmen hergestellter Verbindungen die die Telefaxnachricht darstellenden elektrischen Signalelemente, ausgelöst durch die Eingabe der Rufnummern der empfangsseitigen Telefaxendgeräte (RF1...RFn, RFn + 1...RFm) und eines die Übertragung auslösenden ersten Befehls, überträgt,

**dadurch gekennzeichnet,**

daß das Steuerwerk (CC) des sendeseitigen Telefaxendgeräts (TF) die Rufnummerndaten erster empfangsseitiger Telefaxendgeräfe (RF1...RFn), denen die die Telefaxnachricht darstellenden elektrischen Signalelemente übertragen worden sind, und/oder die Rufnummerndaten zweiter empfangsseitiger Telefaxendgeräte (RFn + 1...RFm), denen die die Telefaxnachricht darstellenden elektrischen Signalelemente nicht übertragen worden sind, mit einer die Übertragung bzw. die Nichtübertragung bezeichnenden Kennung versieht, und daß das Steuerwerk (CC) des sendeseitigen Telefaxendgeräts (TF) ausgelöst durch einen zweiten Befehl, der der Rufnummer mindestens eines zweiten empfangsseitigen Telefaxendgeräts (RFn + 1...RFm) zugeordnet ist, jeweils einen Verbindungsherstellungsversuch zu dem oder den zweiten empfangsseitigen Telefaxendgeräten (RFn + 1...RFm) unternimmt und im Rahmen der dann hergestellten Verbindungen die die Telefaxnachricht darstellenden elektrischen Signalelemente überträgt.

2.  Vorrichtung zur Durchführung des Verfahrens nach Anspruch 1,

    **dadurch gekennzeichnet,**

    daß die Vorrichtung ein Telefaxendgerät (TF) umfaßt, das ein Steuerwerk (CC) mit einem das Verfahren definierenden Programm und einen Speicher (HD, MEM) aufweist, der erste Datenbereiche (COM FIL, MEDI) zur Aufnahme der die Rufnummer bezeichnenden Daten und der die Übertragung bzw. Nichtübertragung bezeichnenden Kennungen und einen zweiten Datenbereich (NA) zur Aufnahme der elektrischen Signalelemente aufweist, daß das Telefaxendgerät (TG) eine mit dem Steuerwerk CC verbundene, der Eingabe der rufnummernindividuellen Daten und der Befehle dienende Eingabeeinrichtung (KB) aufweist.

3.  Vorrichtung nach Anspruch 2,

    **dadurch gekennzeichnet,**

    daß das Telefaxendgerät (TF) eine mit dem Steuerwerk (CC) verbundene Ausgabeeinrichtung (DPL, PRINT) aufweist, die die Rufnummerndaten der zweiten empfangsseitigen Telefaxendgeräte (RFn + 1...RFm) ausgibt.

FIG 1

FIG 2

COMFIL

Absender (TF)
Adressaten
(RF1 ... RFn, RFn+1 ... RFm
Bezug auf MEDI
Aussendungsinformation
(Nachricht an RF1 ... RFn
bisher übertragen/
Nachricht an RFn+1 ... RFm
bisher nicht übertragen)

MEDI

Umfang der Nachricht
(Bytes)
Vorlagenseitenanzahl
Bezug auf NA

Vorlagenseite 1
- Adresse des Beginns der
  Vorlagenseite 1 in NA
- Adresse des Ende der
  Vorlagenseite 1 in NA
- Zustand (Vorlagenseite 1 :
  bisher übertragen/
  bisher nicht übertragen)
  .
  .
  .

Vorlagenseite 2

  .
  .
  .

Vorlagenseite n

NA

Adressierte Bildsignalelemente aller n Vorlagenseiten

## FIG 3a

```
KB/CC
Eingabe eines einen Sendeauftrag
bezeichnenden Befehls

Eingabe rufnummernindividueller Daten
der im Sendeauftrag zu erreichenden
empfangsseitigen Telefaxendgeräte
RF1...RFn, RFn+1...RFm
```

```
LE
Einlegen der zu übertragenden
Telefaxnachricht enthaltenden
Vorlagen
```

```
CC:
Generieren der Datenbereiche
COMFIL, MEDI, NA
Bezugsinform. in COMFIL auf MEDI
Bezugsinform. in MEDI auf NA


Einschreiben in COMFIL
Adressen
(Rufnummern von RF1...RFn,
RFn+1....RFm)
Absender (TF)

CC/LE:
Lesen der Vorlagenbildelemente
und deren Umsetzen in elektr.
Bildsignalelemente

Codieren der Bildsignalelemente

Einschreiben der elektr.
Bildsignalelemente unter
Adressen in NA

Einschreiben in MEDI
Umfang der Nachricht (Bytes)
Vorlagenseitenanzahl
```

## FIG 3b

KB/CC
Eingabe eines die adressatenindividuelle Übertragung vorbereitenden (ersten) Befehls

CC
$i = 1$

CC/CG
Abrufen der Rufnummer von RFi
aus COMFIL
$(1 \leq i \leq n, n+1, \ldots m)$

Verbindungsherstellungsversuch
zu RFi

JA — Verbindungsherstellungsversuch erfolgreich
? — NEIN

CC
Abruf der ersten Bildsignalelemente aus NA,

Übertragen der elektr.
Bildsignalelemente an RFi

JA — Telefaxnachricht vollständig an RFi
übertragen
? — NEIN

# FIG 3c

CC
Aktualisieren
der Zustandsinf. in MEDI
und
der Aussendungsinf. in COMFIL
(Kennung für vollständige Übertragung der Telefaxnachricht
an RFi)

CC
Aktualisieren
der Aussendungsinf.
in COMFIL
(kennung für Nichtübertragung der Telefaxnachricht an RFi)
$i : i + 1$

X

letztes
empfangsseitiges
Telefaxendgerät RFi
(i=m) des Sendeauftrags
?

NEIN

JA

CC
$i : i + 1$

X

CC/DPL//PRINT

Displayanzeige/Ausdruck:
"Sendeauftrag vollständig ausgeführt"

bzw.
"Sendeauftrag nicht ausgeführt für
$RFn + 1$
.
.
.
$RFm$"

KB/CC
Eingabe eines zweiten (Sendeauftrags)
Befehls bezüglich $RFn + 1 ...... RFm$

CC

$i = n + 1 .... m$

X

11